Europäisches Patentamt

European Patent Office

Office européen des brevets

(19)

(11) Publication number: **0 061 297**

**A2**

(12) # EUROPEAN PATENT APPLICATION

(21) Application number: **82301374.3**

(22) Date of filing: **17.03.82**

(51) Int. Cl.³: **G 01 N 21/91**

(30) Priority: **19.03.81 GB 8108642**
**16.04.81 GB 8112197**
**16.04.81 GB 8112198**

(43) Date of publication of application:
**29.09.82 Bulletin 82/39**

(84) Designated Contracting States:
**BE DE FR GB IT**

(71) Applicant: **BRENT CHEMICALS INTERNATIONAL PLC**
**Ridgeway**
**Iver Buckinghamshire SL0 9JJ(GB)**

(72) Inventor: **Brittain, Philip Ian**
**53A Windsor Road**
**Bray Berkshire(GB)**

(72) Inventor: **Cable, Robert Anthony**
**37 Gallys Road**
**Windsor Berkshire(GB)**

(74) Representative: **Lawrence, Peter Robin**
**Broughton et al,**
**Gill, Jennings & Every 53-64 Chancery Lane**
**London WC2A 1HN(GB)**

(54) Penetrant inspection methods and compositions.

(57) During removal of excess fluorescent penetrant composition on a surface the surface may be heated and the consequential loss of sensitivity restored by application of a developer containing a sensitivity restorer, generally a solvent for the fluorescent dye. The penetrant composition is new and may be of simpler formulation than is now conventional. The developer composition is new and may contain the restorer, volatile carrier and, optionally, particulate developer and surfactant. In any developer composition for use with fluorescent penetrants it is desirable to include, in the developer a solution of a dye that absorbs blue and violet radiation but that is substantially transparent to ultraviolet and yellow radiation.

EP 0 061 297 A2

Brent Chemicals International PLC     1      GJE 6081/93

## PENETRANT INSPECTION METHODS AND COMPOSITIONS

This invention relates to penetrant inspection processes and to materials for use in these.

A common method of determining the presence of surface defects, such as cracks and pores, in a metal or other smooth surface comprises applying to the surface a penetrant composition containing a dye, removing excess composition so that penetrant composition remains substantially only in the surface defects, and inspecting the surface. Removal generally involves a washing stage and so the surface is dried before the inspection.

It is desirable for the result to be as sensitive as possible, that is to say to demonstrate the presence of exceedingly small defects as well as larger defects. To improve the sensitivity of the result it is conventional to apply a developer composition over the surface. When the penetrant contains a conventional, non-fluorescing dye (for instance a red dye) the developer may consist essentially of a volatile solvent in which is suspended a fine white powder such as chalk or talc, or may be a powdered composition consisting essentially of the powder.

It is generally now preferred that the dye should be a fluorescent dye, for instance one that fluoresces under ultraviolet light, generally to give a blue or yellow colouration. A mixture of such blue and yellow fluorescing dyes is commonly used.

2

Normally, powdered development compositions are used with fluorescent dye penetrant compositions, the powdered developer consisting essentially of materials such as chalk or talc. The increased sensitivity that the powder causes is generally believed to come from optical effects and from the diffusion of dye caused by the particulate material on the surface of penetrant composition held within a defect.

Solvent developers are only rarely used with fluorescent penetrant compositions, although the literature does include some proposals for their use. These solvent based developers consist essentially of a solvent carrier and the same particulate material, the intention being that the solvent carrier will evaporate rapidly to leave a coating of the particulate material alone on the surface. There have been some proposals to include additives to improve the developing effect. For instance in US Patent Specification No. 3748469 it is proposed to include glycol monobutyl ether in a composition of isopropyl alcohol and talc in order to increase the diffusion of the penetrant from the defect into the developing powder.

A property of all dry powder developers for fluorescent penetrant compositions is that they merely increase the sensitivity of visible indications that are already present. Thus if the fluorescent penetrant is giving a weak but clear indication the developer will improve the strength of the indication, and this is particularly valuable for tracing small defects. However if the penetrant is giving little or no indication of a defect then a dry powder developer will not render it visible.

It has been observed that if the drying of the surface before application of the developer is conducted at room temperature, for instance by gently blowing with cold air, brighter defect indications are obtained than when it is dried in, for instance, an air circulated oven at 80°C for 10 minutes. However room temperature drying is too slow for commercial operations.

Loss of brightness can also occur if the component is hot, for instance as a result of using a trichlorethylene degreaser followed by spraying of the penetrant, or if the penetrant bath itself is heated, for instance by the passage of heavy heated components.

It would be desirable to use higher drying temperatures, for instance surface temperatures exceeding 80°C, so as to speed drying. However it is well recognised that this results in less sensitivity and that a drying temperature of, say 100°C may result in a complete loss of indications.

In an attempt at achieving adequate sensitivity even under quick drying conditions it is well known to include relatively high boiling solvents such as orthophosphate esters, e.g. alkyl, alkylaryl or triaryl phosphates. These have the disadvantages of high cost, high density and high viscosity, and can be toxic. It is also standard to compensate for loss of sensitivity during quick drying by using more dye than would be necessary if drying was conducted solely at room temperature.

Despite all these precautions it is still accepted that surface temperatures above about 80°C will result in such serious loss of sensitivity that they should be avoided, and so manufacturers of fluorescent penetrant normally recommend that the surface temperature should not exceed 80°C or 85°C at the most.

In the September 1979 issue of "Materials Evaluation", Sherwin and Holden suggest that higher drying temperatures than had previously been recommended can be used if high boiling point penetrant compositions are used under controlled heat conditions. The authors conclude that the problems observed when drying temperatures greater than 80°C are used are the result of degradation of the dye stuff and evaporation of the carrier and that the loss of indications is a gradual effect caused by heat. The authors did report some tests in which bulk penetrant was subjected to a temperature higher than normally accepted and showed that the bulk penetrant only lost a small proportion of its fluorescence.

We have now made the surprising discovery that it is in fact possible to restore fluorescence to a penetrant composition that has lost fluorescence due to overheating. Further, as a result of this discovery we now find that it is possible to subject the penetrant composition to heating conditions that do result in significant loss of sensitivity but which give other advantages, such as faster drying, and then restore the sensitivity subsequently by a very easy development process.

A penetrant inspection process according to the invention is one in which a fluorescent penetrant composition containing a fluorescent dye is applied to a surface to be inspected, excess composition is removed so that the penetrant remains substantially only in the surface defects, the surface is heated under conditions that reduce substantially the sensitivity of the remaining penetrant, and then the sensitivity is substantially restored by application of a developer composition containing a sensitivity restorer.

Although we do not wish to be limited by theory we believe that our surprising discovery follows from a solubility effect that has not previously been recognised. We believe that for maximum fluorescence it is necessary for the fluorescent dye to remain in solution in the penetrant composition. Within a defect the penetrant composition is present as a minutely thin film. It therefore has a high surface area per unit volume and a high tendency to lose solvent by evaporation. When some of the solvent in the film does evaporate we believe the fluorescent dye probably comes out of solution, with consequential reduction in the fluorescence of the film.   The conditions described in the article by Sherwin and Holden involved observing the effect of heating the penetrant composition in bulk or in thick films and so probably would not have exhibited the mechanism that we now believe occurs in practice.      If this mechanism is right it follows that the sensitivity restorer must be a material that will resolubilise the fluorescent dye that has come out of solution and indeed we find that best results are obtained when the restorer is a solvent for the dye, preferably  a non-polar solvent, generally a hydrocarbon solvent.  It may be paraffinic, for instance white spirit, or an aromatic solvent, for instance of the type conventionally used for formulating fluorescent penetrant compositions.

Other restorers can be used in place of non-polar solvents, for instance plasticisers, but generally these are less satisfactory.  Whatever the restorer, it is generally preferred that it is substantially transparent to ultraviolet light and substantially colourless.

The restorer must be sufficiently non-volatile that it will substantially restore the sensitivity before it evaporates, even though the surface may be at quite a high temperature.  Preferably therefore the solvent is one that has a boiling point above 70°C.

It is desirable that the penetrant composition should not be contacted with too much of the restorer solvent for too long as otherwise it may "wash" the penetrant out of the blemishes so as to give a blurred effect.  In practice it is easy to avoid this either by applying quite small amounts of the restorer solvent or by ensuring that the restorer solvent is sufficiently volatile that it evaporates before significant blurring occurs.

The developer composition may consist solely of the sensitivity restorer but generally comprises a mixture of the restorer with other components such that the amount of restorer in the developer is generally below 10% by weight, but above 0.5%, typically 1 to 5% by weight.

The major component of the developer is preferably a volatile carrier, for instance an aliphatic alcohol, ketone or halogenated hydrocarbon. The volatility of the carrier should be such that it evaporates readily during or after application to the surface and this generally requires that it should have a boiling point below 70°C and preferably below 50°C. The volatile carrier may be present in amounts of 25 to 98%, generally 80 to 96% and most preferably 90 to 95% by weight of the composition.

The composition may also include conventional particulate developer, typically in amounts of from 2 to 70% and preferably 2 to 30% most preferably 3 to 10% by weight of the composition. The particulate material may be any of the inorganic particulate materials known for use in developer compositions, talc and calcium carbonate being particularly preferred. The preferred developer compositions of the invention thus have the double effect of restoring the lost sensitivity in accordance with the invention and of increasing the sensitivity in conventional manner.

The developer preferably also includes a non-ionic surfactant, for instance an ethoxylated alkyl phenol, e.g. the material sold under the Trade name "Triton X100". This may be present in an amount of 0.1 to 10%, generally 0.5 to 3%, by weight of the composition or, expressed in another way, 5 to 20% based on the weight of the restorer and any particulate developer.

The described developer compositions form a further aspect of the invention.

The developer is generally applied by spraying, the conditions generally being such that the volatile carrier evaporates during spraying and the surface is wetted primarily by the restorer, which may evaporate quite soon after wetting.

Penetrant compositions have previously had to be formulated to give adequate sensitivity despite the loss of sensitivity that has inevitably occurred during drying. This has resulted in the penetrant compositions containing more fluorescent dye than would otherwise ·be required and has resulted in the inclusion of significant amounts of long chain alkyl phthalates or other components necessary to prevent evaporation of the carrier.

As a result of the invention it is now possible to obtain very good results using fluorescent penetrant compositions having a much lower concentration of total dye, for instance 0.1 or 0.3 to 3% and generally 0.5 to 1.5 or at the most 2%, of total dye, compared to the much higher values of around 8% that have commercially been considered necessary in the past in order to compensate for loss of sensitivity during drying. Also these compositions can have a much simpler carrier formulation and may indeed consist solely of a solvent for the dye, for instance a conventional aromatic hydrocarbon solvent. Minor amounts of thickener may be added to increase the viscosity of the composition, in conventional manner, for instance using long chain alkyl phthalates or other thickeners, but such materials are present solely to facilitate application of the composition to the surface. They are not present to modify the properties of the composition to any significant extent once it is on the surface. Their amount is normally below 5% and preferably below 2% or 1%. These simplified penetrant compositions form a further part of the invention.

To carry out the invention the surface to be examined is generally cleaned in conventional manner, and since there is no restriction on temperature this cleaning may be accompanied by heating if desired.

Excess penetrant composition is then applied in conventional manner, for instance by spraying or dipping, and will usually be allowed to remain in contact with the surface for some time.

Excess penetrant is then removed. If the penetrant included a non-ionic emulsifier to render the composition water removable then removal may simply comprise the application of water, often cold water, e.g. by spraying for, for instance, about one minute. Often however a penetrant remover is required, excess superficial penetrant often being first removed by water rinsing. Penetrant remover may be applied by, for instance, immersion typically for about 2 minutes. The resultant surface may then be sprayed with water. Although cold water may be used subsequent drying can be accelerated if either the final water or all the water is hot, e.g. at 80°C.

After the washing of the surface the surface is then heated so as to dry it and this heating can be conducted at a surface temperature of above 85°C. Usually it is at least 90°C, preferably at least 100°C, and most preferably at least 110°C, but will not usually exceed 150°C. Suitable drying conditions are provided by commercially conventional drying apparatus, such as air dryers at 120°C. The duration of the drying will be chosen so as to achieve the necessary dryness but will be considerably shorter than has been considered necessary previously, for instance a surface that previously would have required 10 minutes drying may now only require 4 minutes drying.

Substantial loss of fluorescence will occur during this drying. The application of the developers conventionally used with fluorescent penetrant, and in particular powdered developers, would not significantly restore the lost fluorescence. In the invention the new developer containing a sensitivity restorer is applied, for instance by spraying at a dry rate of from 0.2 to 15 $g/m^2$ onto the hot surface. The system may then be allowed to develop, e.g. for about 5 minutes.

The surface is then inspected under ultraviolet light in conventional manner. Even though the amount of fluorescent dye in the composition may be much less than in conventional compositions and even though the heating conditions are such that fluorescence was temporarily lost the results will show a satisfactorily high degree of contrast and good fluorescent indications.

The following is an example of the invention. A penetrant composition is formulated that consists solely of an aromatic solvent, e.g. that known as 150 Aromatic solvent, together with dyes such as 4-methyl-7-diethylaminocoumarin and N-n-butyl-4-n-butylaminonaphthyl-1,8-imide. The amounts of these components are, respectively, 98.5, 1 and 0.5% by weight.

This composition is applied in conventional manner to the surface that is to be inspected. The surface is then rinsed with water, immersed for two minutes in a conventional penetrant remover and then sprayed with water at 80°C. The surface is then dried by an air dryer at 120°C. This results in substantial loss of fluorescence.

A developer composition is formulated that comprises 92% by weight acetone, 2% by weight white spirit, 5% by weight precipitated calcium carbonate and 1% by weight of an ethoxylated alkylphenol, e.g. Triton X100 or other non-ionic surfactant. This composition is sprayed onto the surface under conditions that the acetone substantially all evaporates before contact with the surface and a coating of white spirit and calcium carbonate is formed on the surface, the white spirit evaporating within a few minutes. The surface is allowed to develop for about 5 minutes and is then inspected under ultraviolet light in conventional manner.

Very sensitive fluorescence, even of very minor defects, is observed.

It is known that it is conventional to have a mixture of two dyes in fluorescent penetrant compositions, one of fluorescing yellow and the other blue.   The above example is typical in this respect.

The optimum result is that, during observation under ultraviolet light, there should be a clear contrast between the defects (which typically shoud appear yellow) and the background (which typically should be practically invisible).

However when examining the surface under ultra-violet light after development it is often found either that there is a localised bluish background around the defects or that there is a uniform bluish background, or both.

The uniform background may be due to reflection of blue/violet illumination from the source of ultra-violet light.  For instance it may not be completely filtered out from a mercury vapour light by the Woods Glass Filter or other filter.  It may also be due to components in the developer that may have slight blue fluorescent properties.  Localised blue background may be due to fluorescence of blue-fluorescing sensitiser dye from the penetrant composition and which has migrated, for instance by volatilisation, from the defect into the area surrounding the defect.

Whatever the cause, local and uniform bluish background is undesirable because it reduces the contrast between the defect indication and its surroundings, and therefore acts to reduce the sensitivity of the inspection process.

The penetrant composition is generally formulated so that the defect appears golden yellow or yellow/green, since this corresponds to the region of maximum visual acuity. An additional disadvantage is that it is sometimes found, particularly with very small defect indications near the limit of detectability of the system, that these tend to be blue or white rather than the yellow or yellow/green of larger defects.

It is in general considered essential that the developer should be colourless or white, so that it will merely enhance the colour of the light emulsion from the penetrant and will not compete with the penetrant. In US Patent Specification No. 3,928,046 it is suggested that a pyrrolidone-type brightener should be included in the developer, but such brighteners are colourless. The only coloured developer of which we are aware is described in U.S. Patent Specification No. 3,564,249. In this a penetrant composition is applied that contains a daylight visible dye having substantially no light emission under ultraviolet illumination, excess penetrant is removed and a developer is then applied containing a fluorescent material, as a result of which the defects appear black due to masking of the fluorescence by the dye.

We have had the additional object of trying to reduce or eliminate the general or localised blue background and, when the defects are intended to appear as yellow or yellow/green, to minimise the tendency of the smallest defect appearing blue. We have had this object both in respect of the liquid developer compositions described above that contain a sensitivity restorer and also other liquid developer compositions that are suitable for use with fluorescent penetrant compositions.

We now surprisingly find that it is desirable to include a particular type of dye in a liquid developer composition for use with a fluorescent penetrant composition. In the invention the developer composition includes a solution of a dye that absorbs blue and violet radiation but that is substantially transparent to ultraviolet and yellow radiation. By the use of such a developer we find it is possible to achieve a marked reduction in blue general or local background and to reduce the tendency of the smallest defects to appear white or blue.

The dye must be present in the developer composition as a solution and so generally the developer includes an organic solvent and is generally a substantially non-aqueous, solvent based, developer, but if the dye is water soluble the developer may be water based. Generally the solvent is an aromatic or paraffinic or other hydrocarbon solvent, for instance as described above. Generally the composition also includes a volatile carrier, again as described above. Generally it includes inorganic particulate developer and optionally a wetting agent, for instance as described above or as described in US Patent Specification No. 3,928,046. The proportions of the volatile carrier and any particulate developer and surfactant may be as described above. Conveniently the solvent for the dye may be present in an amount of from 0.5 to 10% and so if, as preferred, this solvent is a material that will also function as a sensitivity restorer, as described above preferred compositions that make use of this novel discovery are the same as the compositions described above except that include also the specified dye.

The dye in the developer should be non-fluorescent and must absorb strongly in the blue/violet region of the spectrum. However it should be substantially transparent to ultra-violet light and, in order that it does not interfere with the observation of the defect, which is generally intended to appear yellow/green or yellow fluorescent, it should be substantially transparent to yellow radiation, i.e. it should preferably have little or no absorbance at around 560 nm.

Its absorbance for blue light, measured at around 430 nm, is preferably at least twice its absorbance for ultraviolet light, measured at around 365 nm. The larger the ratio between the absorbance at about 430 nm to absorbance at about 365 nm the more effective the dye will be since the exciting ultraviolet light will be less attenuated in comparison with the undesirable blue emitted light. Often the ratio is between 3 and 5.

The dye will be added in an amount that gives a desirable reduction in blue background without causing an undesirable decrease in the observation of the penetrant, due to absorption of ultraviolet or yellow. The amount is generally below 1%, most usually below 0.1% based on the total weight of the developer composition, including volatile solvent.

A suitable dye is Oil Yellow DEA which shows a peak absorbance in solution in industrial methylated spirit at 415 nm with a minimum at 338 nm and virtually complete transparency in the region 540-600 nm. The ratio of the absorbance at 430 to that at 365 nm is 3.5.

An example of a suitable formulation is acetone 92.8% by weight, white spirit 2% by weight, precipitated calcium carbonate 5% by weight, alkyl aryl ethoxylate (Triton X 100) 0.2% by weight, Oil Yellow DEA 0.01% by weight. Such a composition is of particular value with a penetrant composition containing yellow-fluorescing and blue-fluorescing dyes.

By way of example, a fluorescent penetrant composition may comprise an aromatic solvent, e.g. that known as 150 Aromatic solvent, 4-methyl-7-diethyl-aminocoumarin and N-n-butyl-4-n-butylaminonaphthyl-1,8-imide. Suitable amounts of these components are, respectively, 98.5, 1 and 0.5% by weight. Prior to the application of the penetrant composition, the surface under test may be cleaned. When coated with the composition, the surface may be heated if desired. The composition may be applied by spraying or dipping, and will usually be allowed to remain in contact with the component for some time.

Excess penetrant is then removed by application of cold water or by a penetrant remover (optionally after a water rinse), followed by cold water. The surface is then dried by heating and the described developer is then applied. It may be applied by, for instance, spraying at a dry rate of from 0.2 to 15 g/m$^2$.

Using this developer it was found that chromium plated steel test pieces cracked by indentation from the unplated side showed noticeably less·blue background compared with identical test pieces treated in a similar manner but using a developer from which the dye had been omitted.

15

CLAIMS

1.        A penetrant inspection process that comprises applying a penetrant composition containing a fluorescent dye to a surface to be inspected, removing excess composition so that the penetrant remains substantially only in the surface defects, and then applying a developing composition, characterised in that after the removal of excess composition the surface is heated under conditions that reduce substantially the sensitivity of the remaining penetrant, and the developer composition contains a sensitivity restorer and application of the developer composition improves the sensitivity of the remaining penetrant.

2.        A process according to claim 1 characterised in that the sensitivity restorer is a solvent for the dye.

3.        A process according to claim 2 characterised in that the solvent is a paraffinic or aromatic hydrocarbon having a boiling point above 70°C.

4.        A process according to any preceding claim characterised in that the developer composition comprises a volatile carrier and is applied by spraying towards the surface under conditions that substantially all of the volatile carrier evaporates before the developer contacts the surface and the surface is wetted with the developer restorer.

5.        A process according to any preceding claim characterised in that the developer includes particulate developer.

6.         A process according to any preceding claim characterised in that the developer comprises 0.5 to 10% (preferably 1 to 5%) of the sensitivity restorer, 25 to 98% (preferably 80 to 96%) of a volatile carrier, 2 to 70% (preferably 3 to 10%) of a particulate developer and 0 to 10% (preferably 0.5 to 3%) of a non-ionic surfactant, all percentages being by weight.

7.         A process according to any preceding claim characterised in that the penetrant composition consists substantially only of 0.1 to 3% by weight fluorescent dye, solvent for the dye and, optionally, a minor amount of thickener.

8.         A process according to any preceding claim characterised in that the heating of the surface is conducted at a temperature of 85 to 150°C to dry the surface.

9.         A process according to any preceding claim characterised in that the developer composition includes a solution of a dye that absorbs blue and violet radiation but that is substantially transparent to ultraviolet and yellow radiation.

10.        A developer composition suitable for use in a process according to any of claims 1 to 9 and comprising 25 to 98% (preferably 80 to 96%) of a volatile carrier, 0 to 70% (preferably 2 to 10%) of a particulate developer and 0 to 10% (preferably 0.5 to 3%) of non-ionic surfactant, all percentages being by weight, characterised in that it includes 0.5 to 10% (preferably 1 to 5%) of a solvent for fluorescent dye.

11.        A developer according to claim 10 characterised in that the solvent is selected from aromatic and paraffinic hydrocarbons boiling above 70°C and the volatile carrier is selected from aliphatic alcohols, ketones and halogenated hydrocarbons.

12.        A developer according to claim 10 or claim 11 characterised in that it includes a solution of a dye that absorbs blue and violet radiation but that is substantially transparent to ultraviolet and yellow radiation.

13.     A penetrant composition suitable for use in a process according to any of claims 1 to 9 and that comprises fluorescent dye and solvent for the dye characterised in that the composition consists substantially only of the dye, solvent for the dye and optionally a minor amount of thickener and the amount of dye is 0.1 to 3% by weight.

14.     A developer composition for use in developing a fluorescent penetrant during a fluorescent penetrant inspection process and that optionally includes particulate developer characterised in that the composition comprises a solution of a dye that absorbs blue and violet radiation but that is substantially transparent to ultraviolet and yellow radiation.

15.     A developer according to claim 14 characterised in that it includes an organic solvent in which the dye is dissolved.

16.     A developer according to claim 14 or claim 15 characterised in that the absorbance of the dye for blue light, measured at 430 nm, is at least twice its absorbance for ultraviolet light, measured at 365 nm and the dye has substantially no absorbance at 560 nm, and in which the amount of the dye is from 0.1 to 1% by weight.

17.     A penetrant inspection process that comprises applying a penetrant composition containing fluorescing yellow and blue dyes, removing excess composition and then applying a developer composition characterised in that the composition is a composition according to any of claims 14 to 16.